# EUROPÄISCHE PATENTANMELDUNG

(11) **EP 4 489 354 A1**
(43) Veröffentlichungstag der Anmeldung: **08.01.2025**
(21) Anmeldenummer: 24184007.3
(22) Anmeldetag: 24.06.2024
(51) Int. Cl.: H04L 12/40, H04L 12/10

(54) **VORRICHTUNG ZUM VERBINDEN EINES FELDGERÄTS MIT EINEM STEUERUNGSSYSTEM**

(30) Priorität: 27.06.2023 DE 102023116914
(71) Anmelder: Turck Holding GmbH, 58553 Halver (DE)
(72) Erfinder: Strunkmann, Peter, 32760 Detmold (DE)
(74) Vertreter: DTS Patent- und Rechtsanwälte PartmbB

(57) **Zusammenfassung**

Die vorliegende Erfindung betrifft eine Vorrichtung (100) zum Verbinden eines Feldgeräts (F1, F2, F3, Fn) mit einem Steuerungssystem (400), umfassend eine Steuerungs-Schnittstelle (108) zum Herstellen einer datentechnischen Verbindung mit dem Steuerungssystem (400), insbesondere über einen Datenbus (410), beispielsweise mittels einer Ethernet-Verbindung, einen zumindest dreipoligen Feldgerät-Anschluss (104) zum Herstellen einer Verbindung mit dem Feldgerät (F1, F2, F3, Fn) zur Datenübertragung und Leistungsübertragung, beispielsweise über ein IO-Link-Netzwerk, einen Mikroprozessor (102), einen physikalischen Layer (116) für masse-bezogene Kommunikationssignale, insbesondere einen physikalischen IO-Link-Layer "IO-Link PHY", und einen weiteren physikalischen Layer (114) für nicht-massebezogene Kommunikationssignale, insbesondere ein SPE-Layer "SPE PHY". Dabei ist der Feldgerät-Anschluss (104) so ausgebildet, dass das Feldgerät (F1, F2, F3, Fn) für masse-bezogene Kommunikationssignale und für nicht-massebezogene Kommunikationssignale anschließbar ist.

## Beschreibung

Die vorliegende Erfindung betrifft eine Vorrichtung zum Verbinden eines Feldgeräts mit einem Steuerungssystem. Sie betrifft ferner einen Stecker zum Verbinden mit einem Feldgerät-Anschluss einer Vorrichtung der genannten Art sowie ein Set (Kit-of-Parts) aus einer IO-link-Steckerbuchse und einem Stecker. Sie betrifft zudem ein Verfahren zum Betreiben einer Vorrichtung zum Verbinden eines Feldgeräts mit einem Steuerungssystem.

Im technologischen Bereich der PTP-Datenübermittlung (Point-to-Point-Connection) ist die Übermittlung von masse-bezogenen Kommunikationssignalen, wie etwa IO-Link in der Industrieautomation, ein wichtiger technologischer Standard, der die Kommunikation von zentralen Steuerungskomponenten mit Sensoren und Aktoren definiert.

Als physikalische Schnittstelle dient beispielsweise ein dreipoliges Kabel mit zwei Adern für die Spannungsversorgung und einer Ader für die Datenübermittlung beziehungsweise Kommunikation. IO-Link-Schnittstellen, insbesondere auch Stecker und Buchsen für Sensoren und Aktoren sind genormt, siehe hierzu IEC 61131-9.

Mit der neuen Entwicklungen für die Übermittlung von nicht-massebezogenen, rein differenziellen Kommunikationssignalen, wie etwa mittels Single-Pair-Ethernet (SPE) mit beispielsweise den IEEE-Standards (IEEE 802.3bw, IEEE 802.3cg oder IEEE 802.3bp), steht eine ebenfalls einfache physikalische Schnittstelle zur Verfügung, welche für Sensoren und Aktoren geeignet ist und hohe Datenraten ermöglicht, bei gleichzeitig direktem Zugang zu höheren Protokollschichten des Ethernets ohne Gateway (IO-Link Master).

Insbesondere kann mit dem Advanced-Physical-Layer (APL) und Power over Dataline (PoDL) SPE auf denselben zwei Adern übertragen werden, mit dem ein Feldgerät mit Spannung versorgt wird. Das Feldgerät kann auch als "Device" bezeichnet werden und etwa einen Sensor und/oder Aktor umfassen. Bei APL ist ein spezifisches, einpaariges Ethernet vorgesehen, basierend auf 10BASE-T1L (gemäß IEEE 802.3cg) mit zusätzlichen Bestimmungen für die Prozessindustrie. Die Ethernet-APL-Kommunikation basiert auf einer 10-Mbit/s-Vollduplex-Kommunikation, die über ein Twisted-Pair-Kabel transportiert wird.

Aktuell muss sich ein Anlagenbetreiber hinsichtlich der jeweiligen smarten Sensoren und Aktoren für eine der vorgenannten Betriebsweisen entscheiden. Insbesondere können nicht fallweise die Vorteile von beispielsweise SPE-Komponenten in ein bestehendes IO-Link Umfeld eingebracht werden und umgekehrt. Weiterhin müssen Anbieter von smarten Sensoren und Aktoren alle Varianten vorhalten. Dies ist aufwändig und wirtschaftlich sehr nachteilig.

Aus der DE 10 2021 118 268 B3 ist ein Funktionselement mit Doppelfunktion bekannt. Das Funktionselement kann dort an ein IO-link-Netzwerk oder an ein Netz mit SPE angeschlossen werden.

Es ist die Aufgabe der vorliegenden Erfindung, eine verbesserte Vorrichtung bereitzustellen, mittels derer Feldgeräte mit einem Steuerungssystem verbunden werden können. Dabei sollen sowohl Feldgeräte verwendbar sein, die für eine Verwendung von nicht-massebezogenen Kommunikationssignalen ausgelegt sind, etwa Single-Pair-Ethernet (SPE), als auch Feldgeräte, die für eine Verwendung von masse-bezogenen Kommunikationssignalen, etwa IO-Link, ausgelegt sind.

Diese Aufgabe wird durch eine Vorrichtung und ein Verfahren mit den Merkmalen der unabhängigen Ansprüche gelöst. Vorteilhafte Ausgestaltungen sind in den jeweiligen, zugehörigen Unteransprüchen angegeben.

Die Vorrichtung ermöglicht es, ein Funktionselement oder Feldgerät mit einem Steuerungssystem in Verbindung zu setzen und eine Interaktion beziehungsweise Kommunikation mit diesem Steuerungssystem zu ermöglichen. Das Steuerungssystem kann beispielsweise einen Datenbus beziehungsweise ein Busnetzwerk umfassen, etwa zum Automatisieren, Steuern und Regeln von Sensor- und Funktionskomponenten.

Die Vorrichtung zum Verbinden eines Feldgeräts mit einem übergeordneten Steuerungssystem umfasst eine Steuerungs-Schnittstelle zum Herstellen einer datentechnischen Verbindung mit dem Steuerungssystem, insbesondere über einen Datenbus, beispielsweise mittels einer Ethernet-Verbindung. Sie umfasst ferner einen zumindest dreipoligen Feldgerät-Anschluss zum Herstellen einer Verbindung mit dem Feldgerät zur Datenübertragung und Leistungsübertragung, beispielsweise über ein IO-Link-Netzwerk. Die Vorrichtung umfasst zudem einen Mikroprozessor. Sie umfasst einen physikalischen Layer für masse-bezogene Kommunikationssignale, insbesondere einen physikalischen IO-Link-Layer, wie er nachfolgend als "PHY IO-Link" bezeichnet wird, sowie einen weiteren physikalischen Layer für nicht-massebezogene Kommunikationssignale, insbesondere ein SPE-Layer, wie er nachfolgend als "PHY SPE" bezeichnet wird. Dabei ist der Feldgerät-Anschluss so ausgebildet, dass das Feldgerät für masse-bezogene Kommunikationssignale und für nicht-massebezogene Kommunikationssignale anschließbar ist.

Das heißt, der Feldgerät-Anschluss ist so eingerichtet, dass beispielsweise ein klassisches IO-Device anschließbar ist, mit dem über masse-bezogene Kommunikationssignale Daten übertragen werden, wie auch ein anderes Device, bei dem die Datenübertragung über nicht-massebezogene Kommunikationssignale erfolgt, etwa mittels SPE.

Insbesondere ist die Vorrichtung als IO-Master ausgebildet, der mit dem übergeordneten Steuerungssystem beispielsweise über einen Datenbus verbunden ist und an den ein Device oder mehrere Devices mittels IO-Link angeschlossen werden können. Dabei können hier sowohl "klassisches" IO-Link mit masse-bezogenen Kommunikationssignalen, als auch "modernisiertes" IO-Link mit nicht-massebezogenen Kommunikationssignalen, im Folgenden auch "IO-Link über Ethernet" genannt, am gleichen IO-Master verwendet werden. Insbesondere können dabei IO-Devices für unterschiedliche Typen von Kommunikationssignalen an den gleichen Feldgerät-Anschluss angeschlossen werden.

Die Vorrichtung kann ferner einen Leistungs-Eingang zur Versorgung mit elektrischer Leistung umfassen. Andererseits kann die Vorrichtung selbst mittels Power over Data Line (PoOL) mit elektrischer Leistung versorgt werden.

Die Vorrichtung ist insbesondere zum Anschließen eines Feldgeräts eingerichtet, das einen Aktor- und/oder Sensorkopf umfasst. Insbesondere kann ein sogenannter "smarter Sensor" und/oder ein "smarter Aktor" vorgesehen sein. Dabei kann unter einem "smarten Sensor" insbesondere ein Sensor verstanden werden, bei dem neben einer Messgröße auch beispielsweise Einstellparameter, Diagnosedaten und Identifikationsdaten auslesbar sind.

Das Feldgerät umfasst dabei insbesondere eine zumindest dreipolige Steckerbuchse zur Verbindung mit der Vorrichtung und für eine datenleitende Kommunikation und Versorgung des Feldgeräts über ein IO-Link-Netzwerk.

Beispielsweise wird also ein Gerät bereitgestellt, welches das Anschließen von Sensoren und Aktoren in der Automatisierungstechnik nach dem IO-Link-Standard mit einer Kombination von unterschiedlichen physikalischen Schichten ermöglicht. So wird es etwa ermöglicht, IO-Link Sensoren und Aktoren mit unterschiedlichen physikalischen Kommunikationsschichten an einem gemeinsamen IO-Master zu betreiben, beispielsweise klassisches IO-Link und ein "modernisiertes" IO-Link, etwa genannt "IO-Link über Ethernet". Ein IO-Master-Port unterstützt dabei zwei oder mehrere physikalische Kommunikationsmodi, insbesondere klassisches IO-Link und ein IO-Link über Ethernet.

Bei einer Erweiterung des klassischen IO-Link-Protokolls um eine weitere physikalische Schicht, insbesondere das Single Pair Ethernet, SPE (IEEE_802.3cg_2019), werden die klassisch spezifizierten Kommunikationsmethoden kompatibel zu IO-Link auf die SPE-Physik portiert. Dies ermöglicht es etwa, mit größeren Datenmengen zu arbeiten, die über längere Leitungen schneller übertragen werden können.

Die Vorrichtung erlaubt es nunmehr, beide physikalische Schichten in einem Gerät anzubieten, so dass sich der Nutzer nicht mehr zwischen zwei Mastertypen entscheiden muss, um entweder mit einem klassischen IO-Link-Feldgerät oder mit einem Feldgerät über SPE zu kommunizieren und es mit elektrischer Leistung zu versorgen. So kann der Nutzer auch im Mischbetrieb arbeiten und langsam in den neuen Typ von IO-Link Verbindungen migrieren. Dabei sollen an dem gleichen IO-Link-Port, insbesondere mit einer M12-Buchse oder einer M8-Buchse, sowohl Feldgeräte mit klassischem IO-Link als mit SPE angeschlossen und betrieben werden können. Es kann dann die gleiche Vorrichtung genutzt werden, um die Feldgeräte und das IO-Link Netzwerk an einen Datenbus und insbesondere einen Feldbus anzubinden, wie etwa Profinet, Ethernet/IP oder Modbus/TCP.

Es ist eine Konfiguration zur Kommunikation und Versorgung des Feldgerätes mittels masse-bezogener Kommunikationssignale vorgesehen, etwa ein IO-Link oder IO-Link-Netzwerk. Nachfolgend wird vereinfachend von "IO-Link" oder "IO-Link-Netzwerk" gesprochen, womit ganz allgemein ein masse-bezogener Austausch von Kommunikationssignalen gemeint ist, insbesondere für einen Punkt-zu-Punkt-Signal/Datenaustausch.

Ferner ist eine Konfiguration vorgesehen, wobei ein weiterer physikalischer Layer verwendet wird, bei dem ein nicht-massebezogener Austausch von Kommunikationssignalen erfolgt; damit ist insbesondere ein rein differenzielles Kommunikationssignal gemeint. Insbesondere ist dazu ein physikalischer SPE-Layer (PHY SPE) vorgesehen. In Abgrenzung zu dem vorgenannten masse-bezogenen Austausch von Kommunikationssignalen, mittels des PHY IO-Link, besteht bei dem nicht-massebezogenen Austausch von Kommunikationssignalen kein Massebezug, weil nur zwei Adern/Leitungen vorgesehen sind und sich das Signal aus der Differenzspannung dieser beiden Leitungen ergibt. Nachfolgend wird vereinfachend von "SPE", "PHY SPE" und dergleichen gesprochen, wenn ein nicht-massebezogener Austausch von Kommunikationssignalen und die zugehörigen Komponenten gemeint sind.

Dabei ist beispielsweise eine SPE-Lösung mittels 10BASE-T1L vorgesehen. Allerdings können auch andere Lösungen wie mit 100Mbit/s oder mit einer externen Spannungsversorgung, etwa PoDL Class 11/12 oder APL, vorgesehen sein.

Es gibt verschiedene Konfigurationen, um zu gewährleisten, dass die Vorrichtung, insbesondere als IO-Master, mit masse-bezogenen wie mit nicht-massebezogenen Kommunikationssignalen verwendbar ist:
Bei einer Option kann bei der Vorrichtung ein Schalter vorgesehen sein, um zwischen der Verwendung der verschiedenen Typen von Kommunikationssignalen umzuschalten. Insbesondere wird dabei kein PoDL bereitgestellt.

Bei einer Ausbildung der Vorrichtung ist zwischen dem physikalischen Layer für masse-bezogene Kommunikationssignale und dem weiteren physikalischen Layer für nicht-massebezogene Kommunikationssignale ein Schaltelement vorgesehen. Dabei ist die Vorrichtung dazu eingerichtet, das Schaltelement in Abhängigkeit von einem empfangenen Konfigurationssignal und/oder einem für den Feldgerät-Anschluss verwendeten Stecker und/oder empfangenen Kommunikationsdaten und/oder einer Versorgungsart des Feldgeräts so anzusteuern, dass das Schaltelement entweder zu dem physikalischen Layer für masse-bezogene Kommunikationssignale oder zu dem physikalischen Layer für nicht-massebezogene Kommunikationssignale schaltet, sodass die datentechnische Verbindung zu dem Feldgerät über den entsprechenden physikalischen Layer herstellbar ist.

Dabei kann das Schaltelement beispielsweise als elektronischer Schalter, Analogschalter oder Halbleiterschalter ausgebildet sein, beispielsweise mit zumindest einem Feldeffekttransistor und/oder Bipolartransistor.

Das Umschalten kann entweder automatisch erfolgen, indem der Typ eines angeschlossenen Feldgeräts erkannt und ein geeigneter Betriebsmodus der Vorrichtung bestimmt wird. Alternativ oder zusätzlich kann das Umschalten anhand einer Konfiguration durch einen Nutzer erfolgen, der an der Vorrichtung einstellt, welches angeschlossene Feldgerät mit welchem Typ der Verbindung genutzt werden soll und kann.

Insbesondere sind dabei auch eine Steckerbuchse und insbesondere die zugehörigen Leitungswege auch zur Verbindung mit einem Single-Pair-Ethernet (SPE) ausgebildet. Das Schaltelement zwischen den physikalischen Layern schaltet beispielsweise in Abhängigkeit von dem jeweiligen in die Steckerbuchse eingebrachten Stecker und damit auch in Abhängigkeit von den jeweiligen empfangenen Kommunikationsdaten und/oder der Versorgungsart/-charakteristik.

Insbesondere stellt das Schaltelement dabei eine leitende Schaltung zu einem physikalischen IO-Link-Layer oder zu einem physikalischen SPE-Layer her.

Vorteilhafterweise ist das Schaltelement über eine Leitung direkt mit dem Mikroprozessor verbunden, wobei der Mikroprozessor neben dem Betrieb des Aktor- oder Sensorkopfes auch die Funktionen des Schaltelements steuert, wie vorstehend genannt, in Abhängigkeit von dem eingebrachten Stecker und/oder den empfangenen Kommunikationsdaten beziehungsweise der Versorgungsart, insb. der anliegenden Spannung.

Bei einer weiteren Ausbildung ist das Schaltelement über eine Leitung direkt mit dem Mikroprozessor verbunden, wobei der Mikroprozessor dazu eingerichtet ist, die Funktion des Schaltelements zu steuern in Abhängigkeit von dem empfangenen Konfigurationssignal und/oder dem verwendeten Stecker und/oder den empfangenen Kommunikationsdaten und/oder der Versorgungsart des Feldgeräts.

Eine vorteilhafte Ausführungsform sieht vor, dass der Mikroprozessor über die Leitung direkt mit einem Pin der Steckerbuchse verbunden ist, insbesondere mit einem von genau zwei Kommunikationspins. Somit kann die Schaltung in der Ausgangs- oder Ruhestellung passend für den Empfang einer Grundspannung (Versorgung) gestellt sein, wie diese bei einem SPE der Fall ist und beim Erkennen eines IO-Link-Steckers zu dem passenden Layer geschaltet werden, ohne dass es zu Beschädigungen oder übermäßige Spannungsbelastungen der Komponenten kommt.

Bei einer Weiterbildung ist die Vorrichtung dazu eingerichtet, das Feldgerät über ein erstes Adernpaar mit elektrischer Leistung zu versorgen und über ein zweites Adernpaar die datentechnische Verbindung herzustellen. Dabei ist insbesondere der Feldgerät-Anschluss dazu eingerichtet, über zwei Pins (P1, P3) das Feldgerät mit elektrischer Leistung zu versorgen. Dabei ist insbesondere der Feldgerät-Anschluss dazu eingerichtet, zwei weitere Pins (P2, P4) für masse-bezogene Kommunikationssignale als C/Q und optional mit einer Funktion wie DI/DO zu schalten oder für nicht-massebezogene Kommunikationssignale als DL+ und DLzu schalten.

Beispielsweise ist vorgesehen, für die nicht-massebezogenen Kommunikationssignale 10BASE-T1L mit einer separaten Spannungsversorgung, das heißt ohne PoDL, zu verwenden. Es resultiert eine "Hybrid-Lösung" für die beiden Arten der Datenübertragung. So werden etwa zwei separate Adernpaare verwendet, um das Feldgerät mit Daten und Energie zu versorgen. Beispielsweise werden die von einem klassischen IO-Link-Master bekannten Pin 1 und Pin 3 sowohl für die Versorgung des klassischen IO-Link-Gerätes als auch für das IO-Link-über-Ethernet-Gerät verwendet. Pin 4 und Pin 2 müssen nun entweder für die klassische IO-Link-verbindung als C/Q verwendet werden, mit der optionalen Funktion DI/DO, oder sie werden für IO-Link über Ethernet beziehungsweise SPE als DL+ und DL- geschaltet.

Bei einer weiteren Option kann vorgesehen sein, 10BASE-T1L sowie die Leistungsversorgung PoDL Class 11/12 zu verwenden.

Bei einer Ausbildung ist die Vorrichtung dazu eingerichtet, das Feldgerät über ein erstes Adernpaar, insbesondere über zwei Pins (P1, P3), mit elektrischer Leistung zu versorgen. Dabei ist insbesondere für nicht-massebezogene Kommunikationssignale die Vorrichtung dazu eingerichtet, die datentechnische Verbindung ebenfalls über das erste Adernpaar herzustellen, insbesondere über die zwei Pins (P1, P3). Dabei ist insbesondere die Vorrichtung dazu eingerichtet, für masse-bezogene Kommunikationssignale die datentechnische Verbindung über eine weitere Ader herzustellen, insbesondere über einen weiteren Pin (P4), wobei der weitere Pin (P4) insbesondere als C/Q schaltbar ist.

In diesem Fall wird zum Beispiel das IO-Link-Gerät mit nur einem Adernpaar mit Energie und Kommunikation versorgt. In diesem Fall sind Pin 1 und Pin 3 der Vorrichtung, die etwa als klassischer IO-Link-Master ausgebildet ist, neben der bisherigen Aufgabe der Energieversorgung zusätzlich für eine Kommunikation mit Single Pair Ethernet SPE zuständig. Pin 4 (C/Q) bleibt weiterhin der Verwendung mit klassischem IO-Link vorbehalten. Das heißt, eine als IO-Link-Master ausgebildete Vorrichtung kann entweder über Pin 4 masse-bezogen mit einem klassischen IO-Link-Gerät kommunizieren. Die Vorrichtung kann aber auch über Pin 1 und 3 nicht-massebezogen etwa über "IO-Link über Ethernet" mit einem für SPE ausgebildeten IO-Link-über-Ethernet-Gerät "sprechen" beziehungsweise kommunizieren. Die Versorgung erfolgt in beiden Fällen über Pin 1 und 3, im Falle des klassischen IO-Link mit 24V und GND, im Falle von IO-Link über Ethernet mit PoDL und den für SPE/PoDL spezifizierten Schaltkreisen.

Es kann vorgesehen sein, dass der SPE-Layer und der IO-Link-Layer parallel arbeiten und auf beiden Wegen ein Austausch von Kommunikationssignalen erfolgen kann. Insbesondere können hierfür zwei Pins zur Leistungsübertragung und für eine Kommunikation *via* SPE vorgesehen sein, etwa für APL. Dazu wird der physikalische Layer für SPE, PHY SPE, mit einer Spannungsversorgung Power over Data Line, PoOL, kombiniert, wobei die beiden Pins als Versorgungspinne für das IO-Link-Gerät fungieren und die Versorgungsspannung bereitstellen können. Da das zugleich mittels IO-Link übertragene Datensignal auf Sender- und Empfängerseite denselben Massebezug haben muss, wird das IO-Link-Datensignal über einen weiteren (reinen) Daten- oder Kommunikationspin geleitet. Die weitere Schaltung entspricht dann dem Standard. Bei diesem Aufbau könnten beide Protokolle parallel verwendet werden, oder nur das Protokoll, für welches (zuerst) eine Kommunikation aufgebaut wird.

Die Kommunikation über IO-Link und SPE kann somit auch parallel stattfinden, sodass mindestens ein Teil der Daten redundant und mit hoher Diversität übermittelt werden kann.

Durch die redundante Struktur ergibt sich der Vorteil, dass für die einzelnen Pfade kein hohes Sicherheitslevel erreicht werden muss, sondern Standardkomponenten und Standardfirmware eingesetzt werden können. Die Sicherheit wird erst durch die redundante Struktur und eine Überwachung auf Übereinstimmung der sicherheitsrelevanten Daten erreicht.

Ferner kommen für die nicht-massebezogene Kommunikation beispielsweise 100BASE-T1L (100Mbit/s), IEEE802.3dg oder 10BASE-T1S infrage.

Bei einer weiteren Ausbildung kann ferner vorgesehen sein, dass analog zu den oben genannten Kombinationen eine nicht-massebezogene Kommunikation *via* APL zusammen mit masse-bezogenem, klassischem IO-Link implementiert wird.

Bei einer Ausbildung ist die Vorrichtung dazu eingerichtet, das erste Adernpaar, insbesondere die zwei Pins (P1, P3), so anzusteuern, dass das Feldgerät bei masse-bezogenen Kommunikationssignalen mit einer Spannung von 24 V und GND, sowie bei nicht-massebezogenen Kommunikationssignalen mittels Power over Dataline, PoOL, beziehungsweise über Single Pair Ethernet/Power over Dataline, SPE/PoDL, mit elektrischer Leistung versorgt wird.

Die Vorrichtung ist also insbesondere dazu eingerichtet, über zwei Pins (P1, P3) das Feldgerät mit Spannung zu versorgen und parallel über dieselben beiden Pins (P1, P3) eine nicht-massebezogene Datenübermittlung auszuführen, insbesondere über SPE. Dabei ist die Vorrichtung insbesondere ferner dazu eingerichtet, über einen dritten Pin P4, insbesondere einen Kommunikationspin, eine masse-bezogene Datenübermittlung auszuführen, insbesondere mittels einer IO-Link-Verbindung parallel zur SPE-Datenübermittlung. Diese beiden Arten der Datenübermittlung werden insbesondere zeitgleich bereitgestellt, etwa als redundante parallele Datenübermittlung.

Bei einer weiteren Ausbildung ist der Mikroprozessor über die Leitung direkt mit einem Pin (P1, P2, P3, P4), insbesondere mit einem Kommunikationspin (P2, P4), leitend verbunden.

Bei einer Weiterbildung umfasst der Feldgerät-Anschluss eine Steckerbuchse, die als IO-LINK-Steckerbuchse nach der Norm 61131-9, insbesondere drei- oder vierpolig, ausgebildet ist.

Bei einer Ausbildung umfasst der Feldgerät-Anschluss eine Steckerbuchse, die zur mechanischen und leitenden Verbindung mit einem Stecker ausgebildet ist. Dabei weist die Steckerbuchse zumindest vier Pins (P1, P2, P3, P4) auf, insbesondere konform zum IO-Link-Standard, umfassend zwei Pins (P2, P4) zur Datenübertragung und zwei Pins (P1, P3) zur Leistungsübertragung, insbesondere für eine IO-Link-Verbindung. Dabei ist die Steckerbuchse ferner zur zweipoligen Verbindung mit einem SPE-Stecker für ein Twisted-Pair-Kabel eines Single-Pair-Ethernet (SPE) geeignet, wobei der SPE-Stecker leitend mit den zwei Pins (P2, P4) zur Kommunikation verbindbar ist. Dabei ist die Steckerbuchse zudem formschlüssig mit einem IO-Link-Stecker verbindbar.

Der Stecker zum Verbinden mit einem Feldgerät-Anschluss einer Vorrichtung nach einem der vorherigen Ansprüche, insbesondere zum Verbinden der Vorrichtung mit dem Feldgerät über Single Pair Ethernet, SPE, insbesondere mit einer Leistungsübertragung über SPE, weist zumindest ein nicht-leitendes, formschlüssiges Gegenelement zu einem Pin (P2) des Feldgerät-Anschlusses auf.

Der Stecker kann dadurch formschlüssig mit der Steckerbuchse verbunden werden, auch sollen einzelne Pins der Steckerbuchse nicht leitend mit dem Feldgerät verbunden werden, da diese für eine SPE-Verbindung nicht notwendig sind. Dadurch kann der Stecker für eine SPE-Verbindung mit dem Feldgerät verwendet werden, auch wenn die Steckerbuchse zusätzliche Pins (P1, P3) für IO-Link-Verbindungen aufweist. Hierdurch wird ferner eine zusätzliche Stabilität erreicht.

Der Stecker ist insbesondere für die vorliegend beschrieben Vorrichtung ausgebildet. Er weist daher die gleichen Vorteile auf und kann in analoger Weise fortgebildet werden.

Das Set beziehungsweise "Kit-of-Parts" besteht aus einer IO-Link-Steckerbuchse und einem Stecker. Dabei ist die IO-Link-Steckerbuchse vierpolig und nach IO-Link-Standard ausgebildet, aufweisend zumindest einen Pin (P4) zur masse-bezogenen Datenübertragung und zwei Pins (P1, P3) zur Leistungsübertragung, wobei der Stecker als SPE-Stecker für ein Twisted-Pair-Kabel eines Single-Pair-Ethernet (SPE) zweipolig ausgebildet ist, wobei der Stecker leitend mit den zwei Pins (P1, P3) zur Leistungsübertragung der IO-Link-Steckerbuchse verbindbar ist.

Insbesondere ist dabei der Stecker formschlüssig mit der IO-Link-Steckerbuchse verbindbar. Ferner kann der Stecker verrastbar mit der IO-Link-Steckerbuchse verbindbar ausgebildet sein.

Das Set ist insbesondere zur Verwendung bei der vorliegend beschriebenen Vorrichtung ausgebildet. Es weist daher die gleichen Vorteile auf und kann in analoger Weise fortgebildet werden.

Das Verfahren zum Betreiben einer Vorrichtung zum Verbinden eines Feldgeräts mit einem übergeordneten Steuerungssystem umfasst die Schritte:
- Herstellen einer datentechnischen Verbindung der Vorrichtung mit dem Steuerungssystem, insbesondere über einen Datenbus, beispielsweise mittels einer Ethernet-Verbindung;
- Anschließen des Feldgeräts an die Vorrichtung über eine Steckverbindung aus einer Steckerbuchse der Vorrichtung und einem Stecker mit einem Kabel zur Datenübertragung und Leistungsübertragung zwischen der Vorrichtung und dem Feldgerät;
- Erkennen eines Typs von für das Feldgerät verwendbaren Kommunikationssignalen, insbesondere masse-bezogene Kommunikationssignale wie bei IO-Link oder nicht-massebezogene Kommunikationssignale wie bei SPE;
- vom Erkennen abhängiges Einstellen der Vorrichtung für eine Datenübertragung mittels eines physikalischen Layers für masse-bezogene Kommunikationssignale, beispielsweise über ein IO-Link-Netzwerk, oder eines physikalischen Layers für nicht-massebezogene Kommunikationssignale, beispielsweise über ein SPE-Netzwerk.

Das Verfahren ist insbesondere dazu ausgebildet, die vorliegend beschriebene Vorrichtung zu betreiben. Es weist daher die gleichen Vorteile auf und kann in analoger Weise fortgebildet werden.

Bei einer Ausbildung des Verfahrens wird das Feldgerät mittels des oben beschriebenen Sets aus einer IO-Link-Steckerbuchse und einem Stecker mit der Vorrichtung verbunden.

Es ist bei einer Datenübermittlung bei PoOL, wie es etwa mit SPE vorgesehen sein kann, kritisch, wenn aus Sicherheitsgründen zyklische Abschaltungen erforderlich sind, weil dann keine Steuer- und Regelsignale weitergeleitet werden. Daher wird eine Verfahrensvariante vorgeschlagen, bei der eine sicherheitsrelevante Kommunikation mit den folgenden Schritten vorgenommen wird:
- Die Kommunikation mittels IO-Link- und SPE-Protokoll wird parallel aufgebaut,
- Daten können parallel übermittelt und verglichen werden.
- Insbesondere werden sicherheitsrelevante Daten zyklisch auf beiden Protokollen übermittelt und es werden in einem Kreuzvergleich diese sicherheitsrelevanten Daten evaluiert. Bei Nicht-Übereinstimmung der sicherheitsrelevanten Daten wird ein sicherer Zustand eingeleitet, der in einer Spannungsverminderung oder Ausschaltung besteht.
- Insbesondere kann die Versorgung mit Spannung über zwei Pins vorgenommen werden, optional kann einer oder mehrere weitere Pins zur reinen Spannungsversorgung vorgesehen sein. Über zwei der Versorgungspins erfolgt die SPE-Datenübermittlung, wobei zeitgleich über einen weiteren Pin (Kommunikationspin), der kein Versorgungspin zur Leistungsübertragung ist, die IO-Link-Datenübermittlung parallel zur SPE-Datenübermittlung erfolgt.

Bei einer Ausbildung des Verfahrens können unterschiedliche Kategorien der parallelen Datenübermittlung definiert sein. Diese sind insbesondere eine "Standardkategorie", bei welcher Daten mittels IO-Link und SPE mindestens teilweise redundant übermittelt und ausgewertet werden. Eine weitere Kategorie kann eine "Ausnahmekategorie" darstellen, die insbesondere zur Überwachung und bei Störungen gewählt wird, wie beispielsweise spannungs- und/oder stromlosen Zuständen, wobei nur überwachungs- und/oder sicherheitsrelevante Daten über eine IO-Link-Verbindung übermittelt werden, die von einer Spannungsversorgung unabhängig betrieben werden kann. Als weitere Kategorie, neben der genannten Redundanz, kann der Betrieb über nur eins der beiden Systeme (SPE/IO-Link) erfolgen, bei identischer Spannungsversorgung. Eine Unterscheidung kann dann im Vorfeld erfolgen, sofern feststeht, dass die Daten nicht sicherheitsgerichtet ausgewertet werden müssen.

Bei einer weiteren Ausbildung ist vorgesehen, dass die Ausnahmekategorie als Takt oder Frequenz in einer definierten Dauer und/oder Häufigkeit parallel zur Standardkategorie vorgenommen wird.

Insbesondere ist das Feldgerät durch ein Stecker-Steckerbuchsen-Set nach einem der vorgenannten Ausführungsformen mit der Vorrichtung verbunden.

Es ist somit möglich, mit der gleichen Vorrichtung, insbesondere mit dem gleichen IO-Link-Master, einen Sensor und/oder Aktor mittels SPE und IO-Link anzusteuern, indem die Vorrichtung eine Steckerbuchse aufweist, die zwei Datenpins für die Datenweiterleitung umfasst und mindestens zwei Pins zur Spannungsversorgung (Spannungspins). Die Datenpins dienen entweder als DL+ oder DL- (data line + und -) für die nicht-massebezogene SPE-Übertragung oder als Kommunikationskanal (C/Q, insbesondere für die masse-bezogene IO-Link-Kommunikation) und einem optionalen weiteren Datenkanal im Falle der Nutzung als IO-Link.

Die Vorrichtung kann eigenständig bestimmen, ob eine Verbindung mit einem Feldgerät *via* SPE oder IO-Link/SIO (IO-Link/Standard Input and Output) vorliegt. Die Steckerbuchse ist als eine hybride SPE/IO-Link-Buchse ausgebildet.

Weitere Einzelheiten und Vorteile der Erfindung sollen nun anhand eines in den Zeichnungen dargestellten Ausführungsbeispiels näher erläutert werden.

Es zeigen:
- Fig. 1: eine Skizze der Verschaltung eines ersten Ausführungsbeispiels der Vorrichtung;
- Fig. 2: eine Skizze der Verschaltung eines zweiten Ausführungsbeispiels der Vorrichtung; und
- Fig. 3: eine Skizze eines Netzwerks mit einem übergeordneten Steuersystem, einer Vorrichtung und Feldgeräten.

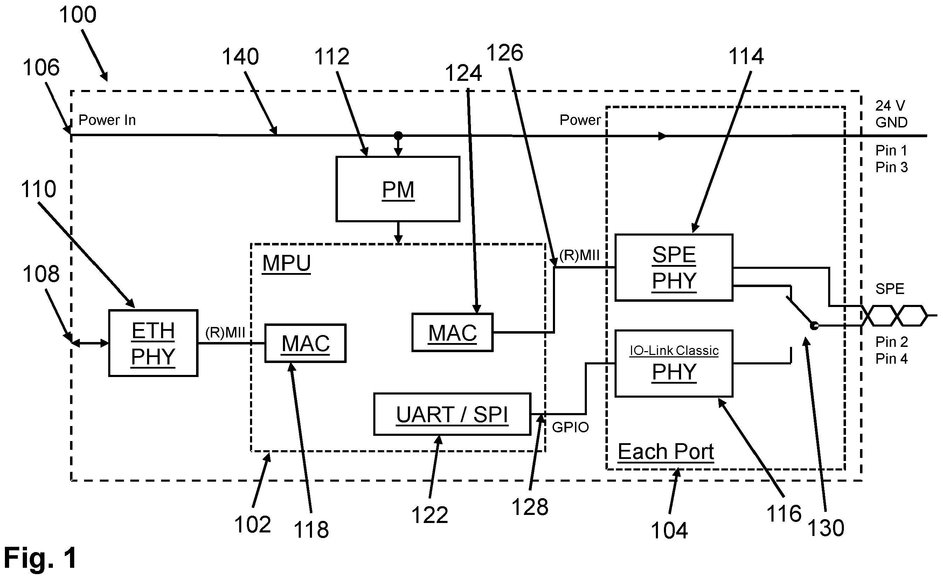

Mit Bezug zu Figur 1 wird eine Skizze der Verschaltung eines ersten Ausführungsbeispiels der Vorrichtung erläutert.

Die Vorrichtung 100 weist einen Leistungs-Eingang 106 zur Versorgung mit elektrischer Leistung auf ("Power In").

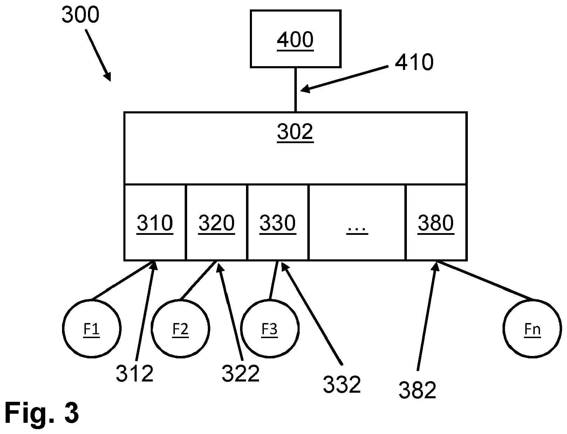

Die Vorrichtung 100 weist ferner eine Steuerungs-Schnittstelle 108 auf, die an ein übergeordnetes Steuerungssystem anschließbar ist, vergleiche etwa das in Figur 3 gezeigte übergeordnete Steuerungssystem 400. Im vorliegenden beispielhaften Fall ist das Steuerungssystem über einen Datenbus 410 mit der Vorrichtung 100, 300 verbunden, die hierbei als Ethernet-Verbindung 410 ausgebildet ist.

Um die datentechnische Verbindung zu dem Datenbus 410 mittels Ethernet herzustellen und zu betreiben, ist bei dem Beispiel der Vorrichtung 100 ein physikalischer Layer ETH-PHY 108 vorgesehen, über den die Schnittstelle mit dem Datenbus 410 implementiert wird.

Die Vorrichtung 100 des Beispiels umfasst ferner einen nicht gezeigten Anschluss, insbesondere eine Steckerbuchse, zum Anschluss an den Datenbus 410 mittels eines Kabels. Insbesondere ist hier ein standardmäßig für Ethernet-Verbindungen genutzter Steckertyp vorgesehen; alternativ oder zusätzlich kann eine kabellose Schnittstelle vorgesehen sein.

Die Vorrichtung 100 weist ferner einen Feldgerät-Anschluss auf, der anhand von vier Adern beziehungsweise Pins P1, P2, P3, P4 gezeigt ist.

Die Vorrichtung 100 weist eine Steuereinheit 102 auf, die als Mikroprozessoreinheit (micro processor unit, MPU) ausgebildet ist. Diese Steuereinheit 102 ist insbesondere als Ethernet-Switch ausgebildet, der für die beschrieben Funktionalitäten der Vorrichtung 100 konfiguriert ist.

Ein PM-Modul 112 (power management, PM) ist über eine Leitung 140 mit der Steuereinheit "MPU" 102 und mit der Leistungsversorgung "Power In" 106 verbunden. Die Leistungsversorgung eines angeschlossenen Feldgeräts, wie etwa in Figur 3 als Feldgeräts F1, F2, F3, Fn gezeigt, ist über das PM-Modul 112 steuerbar, welches ferner über die Steuereinheit MPU 102 steuerbar ist.

Die Verbindung mit einem oder mehreren Feldgeräten F1, F2, F3, Fn kann über entsprechende Feldgerät-Anschlüsse 312, 322, 332, 382 erfolgen, wobei insbesondere kabelgebundene Verbindungen vorgesehen sind.

Insbesondere sind für jeden Feldgerät-Anschluss 312, 322, 332, 382 beziehungsweise "Port" der Vorrichtung 100 zumindest je ein physikalischer Layer "IO-link Classic PHY" 116 für masse-bezogene Kommunikationssignale und ein physikalischer Layer "SPE PHY" 114 für nicht-massebezogene Kommunikationssignale vorgesehen.

Insbesondere ist dabei vorgesehen, dass jeweils der physikalische Layer "SPE PHY" 114 eines Ports 312, 322, 332, 382 über eine (R)MII-Schnittstelle 126 (reduced media-independent interface, RMII) mit einem MAC-Modul 124 verbunden ist, welches dem Port 312, 322, 332, 382 zugeordnet ist.

Weiter ist insbesondere vorgesehen, dass der physikalische Layer "IO-link Classic PHY" 116 über eine GPIO-Schnittstelle 128 (General Purpose Input/Output) mit dem UART/SPI-Modul 122 der Steuereinheit MPU 102 verbunden ist.

Der in Figur 1 gezeigte Fall entspricht einem Ausführungsbeispiel, bei dem insbesondere 10BASE-T1L mit einer separaten Versorgung, das heißt ohne PoDL, implementiert wird. Es handelt sich insofern quasi um eine "hybride" Ausführungsform.

Insbesondere kann die Vorrichtung 100 bei dem Beispiel als IO-Master 100 betrieben, während die Feldgeräte F1, F2, F3, Fn als IO-Link-Devices betrieben werden können.

Bei diesem Beispiel der Vorrichtung 100 wird ein angeschlossenes Feldgerät F1, F2, F3, Fn über jeweils zwei Adernpaare mit Energie beziehungsweise Kommunikation versorgt. Insbesondere sind die Pins "Pin 1" und "Pin 3" der Vorrichtung 100 für die Versorgung der Feldgeräte F1, F2, F3, Fn zuständig, unabhängig davon, ob ein klassisches IO-Link-Device für massebezogene Kommunikation oder anderes IO-Link-Device für nicht-massebezogene Kommunikation verwendet ist.

Die Pins "Pin 2" und "Pin 4" werden bei dieser beispielhaften Ausbildung für die Datenübertragung verwendet. Ihre Ansteuerung wird danach angepasst, ob ein an den jeweiligen Port 312, 322, 332, 382 angeschlossenes Feldgerät F1, F2, F3, Fn für eine masse-bezogene oder nicht-massebezogene Kommunikation eingerichtet ist.

Zum Anpassen der Ansteuerung ist ein Schaltelement 130 vorgesehen, das umschaltbar ist zwischen einer Verbindung mit dem physikalischen Layer "SPE PHY" 114 und dem physikalischen Layer "IO-Link-Classic PHY" 116.

Bei einer masse-bezogenen Kommunikation, etwa *via* IO-Link-Classic, werden "Pin 2" und "Pin 4" durch das Schaltelement 130 entsprechend den anzuwendenden Standards geschaltet, um als "C/Q" zu fungieren, optional mit einer Funktion wie "DI/DO". Sie sind dann mit dem physikalischen Layer "IO-Link-Classic PHY" 116 verbunden.

Bei einer nicht-massebezogenen Kommunikation, etwa *via* SPE oder eine andere Ethernet-Verbindung, werden sie durch das Schaltelement 130 entsprechend den anzuwendenden Standards als "DL+" und "DL-" geschaltet. Dabei wird insbesondere eine Verbindung zu dem physikalischen Layer "SPE PHY" 114 geschaltet.

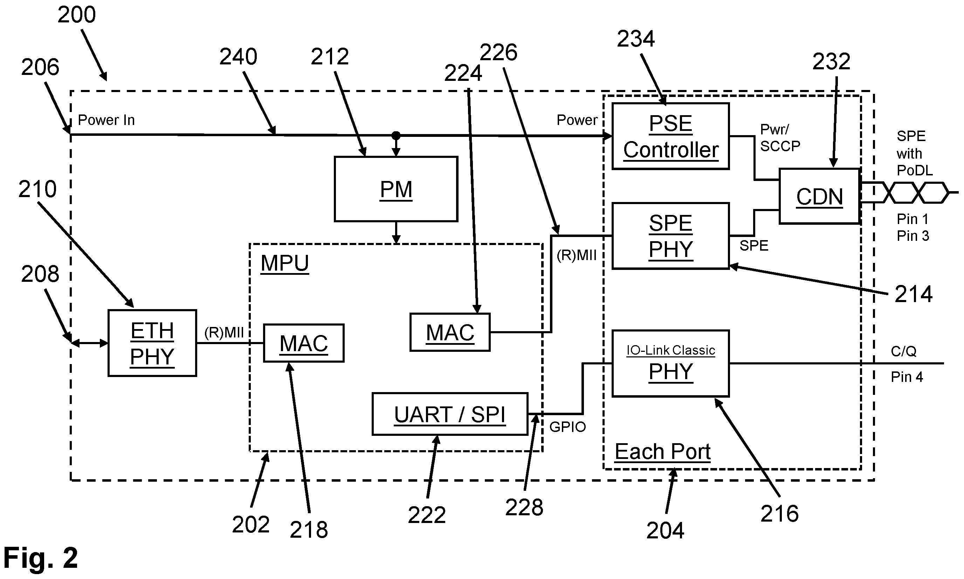

Mit Bezug zu Figur 2 wird eine Skizze der Verschaltung eines zweiten Ausführungsbeispiels der Vorrichtung 200 erläutert. Die hier beispielhaft gezeigte Vorrichtung 200 ist in einigen Teilen analog zu der oben mit Bezug zu Figur 1 erläuterten Vorrichtung 100 gemäß dem ersten Ausführungsbeispiel ausgebildet. Funktional und/oder strukturell vergleichbare Elemente sind daher mit analog gebildeten Bezugszeichen versehen und werden nachfolgend nicht im Detail nochmals beschrieben.

Bei dem zweiten Ausführungsbeispiel wird eine weiteren Option implementiert, bei der beispielsweise eine Ethernet-basierte Kommunikation *via* 10BASE-T1L erfolgen kann, mit einer Leistungsübertragung *via* "PoDL Class 11/12" oder einen ähnlichen Standard zur Übertragung von elektrischer Leistung über die gleichen Leitungen wie für die Datenübertragung und gleichzeitig zur Datenübertragung.

Bei der gezeigten Vorrichtung 200, die ebenfalls als IO-Link-Master 200 verwendet wird, ist keine Umschaltung vorgesehen, wie sie bei dem oben erläuterten ersten Ausführungsbeispiel mittels des Schaltelements 130 ausgeführt wird. Vielmehr können über "Pin 1" und "Pin 3" ein Adernpaar für SPE/PoDL und zusätzlich eine elektrische Leistungsversorgung für klassisches IO-Link bereitgestellt werden.

Die Vorrichtung 200 ist grundsätzlich ähnlich wie die Vorrichtung 100 des ersten Ausführungsbeispiels gemäß Figur 1 aufgebaut. Sie umfasst einen Leistungs-Eingang 206 zur Versorgung mit elektrischer Leistung ("Power In"), eine Steuerungs-Schnittstelle 208 zum Anschließen an ein übergeordnetes Steuerungssystem 400 *via* Datenbus 410 und einen physikalischen Layer ETH-PHY 208, über den die Schnittstelle mit dem Datenbus 410 implementiert wird. Die Vorrichtung 200 des zweiten Ausführungsbeispiels umfasst ferner einen Feldgerät-Anschluss auf, der anhand von vier Adern beziehungsweise Pins P1, P2, P3, P4 gezeigt ist. Es ist eine Steuereinheit MPU 202 vorgesehen, die insbesondere als Ethernet-Switch ausgebildet und für die beschrieben Funktionalitäten der Vorrichtung 200 konfiguriert ist. Zudem ist ein PM-Modul 212 (power management, PM) über eine Leitung 240 mit der Steuereinheit "MPU" 202 und mit der Leistungsversorgung "Power In" 206 verbunden. Die Leistungsversorgung eines angeschlossenen Feldgeräts, wie etwa in Figur 3 als Feldgeräts F1, F2, F3, Fn gezeigt, ist über das PMIC-Modul 212 steuerbar, welches ferner über die Steuereinheit MPU 202 steuerbar ist. Für jeden Feldgerät-Anschluss 312, 322, 332, 382 beziehungsweise "Port" der Vorrichtung 200 sind zumindest je ein physikalischer Layer "IO-link Classic PHY" 216 für masse-bezogene Kommunikationssignale und ein physikalischer Layer "SPE PHY" 214 für nicht-massebezogene Kommunikationssignale vorgesehen. Insbesondere ist dabei vorgesehen, dass jeweils der physikalische Layer "SPE PHY" 214 eines Ports 312, 322, 332, 382 über eine (R)MII-Schnittstelle 226 (reduced media-independent interface, RMII) mit einem MAC-Modul 224 verbunden ist, welches dem Port 312, 322, 332, 382 zugeordnet ist. Der physikalische Layer "IO-link Classic PHY" 216 ist über eine GPIO-Schnittstelle 228 (General Purpose Input/Output) mit dem UART/SPI-Modul 222 der Steuereinheit MPU 202 verbunden.

Im Unterschied zu dem ersten Ausführungsbeispiel ist bei der Vorrichtung 200 für jeden Feldgerät-Anschluss 204 der "Pin 4" als "C/Q" konfiguriert und direkt mit dem physikalischen Layer "IO-Link-Classic PHY" 216 verbunden.

Ferner ist für jeden Feldgerät-Anschuss 204 ein CDN-Modul 232 vorgesehen, das mit "Pin 1" und "Pin 3" verbunden ist, über die bei nicht-massebezogener Kommunikation SPE mit PoDL bereitgestellt werden kann, beziehungsweise über die eine Leistungsversorgung bei masse-bezogener Kommunikation bereitgestellt werden kann.

Das CDN-Modul ist mit einem PSE-Controller-Modul 234 sowie dem physikalischen Layer "SPE PHY" 214 gekoppelt. Das PSE-Controller-Modul 234 ist wiederum über die Leitung 240 mit dem Leistungs-Eingang 206 gekoppelt.

In diesem Fall kann ein angeschlossenes Feldgerät F1, F2, F3, Fn über ein Adernpaar "Pin 1" und "Pin 3" sowohl mit elektrischer Leistung, als auch mit Kommunikation versorgt werden.

Im gezeigten Fall werden "Pin 1" und "Pin 3" so angesteuert, dass über sie - zusätzlich zur Leistungsversorgung - auch eine (nicht-massebezogene) Kommunikation über Single Pair Ethernet (SPE) erfolgen kann. Es kann also SPE mit PoDL implementiert werden.

Dies steht im Unterschied zu klassischen IO-Master-Geräten für eine masse-bezogene Kommunikation *via* IO-Link, da solche vorbekannten Geräte über die Pins 1 und 3 lediglich eine elektrische Leistungsversorgung bereitstellen.

Bei dem gezeigten Ausführungsbeispiel bleibt der Pin "Pin 4" für "C/Q" weiterhin der Verwendung mit klassischen IO-Link-Devices vorbehalten, das heißt einer masse-bezogenen Kommunikation. Wenn ein Feldgerät F1, F2, F3, Fn zur Verwendung mit SPE/PoDL angeschlossen wird, dann kann dieser Pin abgeschaltet werden oder er kann von dem Feldgerät ignoriert werden beziehungsweise ein Stecker zum Anschließen eines Feldgeräts F1, F2, F3, Fn für SPE/PoDL kann so ausgebildet sein, dass Pin 4 nicht leitend mit dem Feldgerät verbunden wird.

Der lO-Link-Master 200 des Ausführungsbeispiel kann zur Datenübertragung entweder "Pin 4" nutzen, um mit einem klassischen IO-Link-Device zu kommunizieren, oder es kann über das Adernpaar der Pins "Pin 1" und "Pin 3" ein neueres, moderneres IO-Link-über-Ethernet-Device über SPE zum Datenaustausch und zur Leistungsversorgung angebunden werden.

Die Versorgung mit elektrischer Leistung erfolgt in beiden Fällen über "Pin 1" und "Pin 3"; im Falle von klassischem IO-Link werden typischerweise 24 V und GND verwendet, im Falle von PoDL beziehungsweise SPE/PoDL werden die dafür spezifizierten Schaltkreise verwendet.

Im Falle von klassischem IO-Link kann das CDN von der Mikroprozessoreinheit MPU mittels Schaltelementen überbrückt werden, um den zur Datenübertragung nötigen Massebezug über "Pin 4" herzustellen; dabei wird die Versorgung (Pwr) aus dem PSE direkt auf "Pin 1" und "Pin 3" geleitet.

Mit Bezug zu Figur 3 wird ein Beispiel eines Netzwerks mit einem übergeordneten Steuersystem, einer Vorrichtung und Feldgeräten erläutert.

Figur 3 ist dabei sehr schematisch gehalten und zeigt ein übergeordnetes Steuersystem 400, das über einen Datenbus 410 mit der Vorrichtung 300 verbunden ist.

Es kann eine zusätzliche elektrische Leistungsversorgung der Vorrichtung 300 vorgesehen sein, die jedoch hier nicht dargestellt ist.

Die Vorrichtung 300 ist bei dem Beispiel als IO-Master und Ethernet Switch 302 ausgebildet.

Sie weist Ports 310, 320, 330, 380 auf, die jeweils mit Feldgeräten F1, F2, F3, Fn gekoppelt sind.

Die Vorrichtung 300 ist dabei auf die vorliegend beschriebene Weise ausgebildet und ermöglicht eine Verbindung zwischen dem übergeordneten Steuersystem 400 und den Feldgeräten F1, F2, F3, Fn, insbesondere indem diese als IO-Link-Devices verwendet werden.

An die gleiche Vorrichtung 300 können solche Feldgeräte F1, F2, F3, Fn angeschlossen werden, die für eine nicht-massebezogene Kommunikation beispielsweise mittels SPE eingerichtet sind, sowie Feldgeräte F1, F2, F3, Fn, die für eine masse-bezogene Kommunikation beispielsweise mittels klassischem IO-Link eingerichtet sind.

Je nach Ausbildung der Vorrichtung 300 kann zudem eine elektrische Leistungsversorgung über SPE/PoDL vorgesehen sein oder eine separate Leistungsversorgung, insbesondere bei SPE ohne PoDL.

Es kann auch eine Mischung verschiedener Feldgeräte F1, F2, F3, Fn angeschlossen und mit dem gleichen IO-Master 302 betrieben werden.

### Bezugszeichenliste

- 100: Vorrichtung, IO-Link-Master
- 102: Mikroprozessor, Steuereinheit MPU; Ethernet-Switch
- 104: Feldgerät-Anschluss, Port
- 106: Leistungs-Eingang
- 108: Steuerungs-Schnittstelle (Ethernet)
- 110: Physikalischer Layer "ETH PHY"
- 112: PM-Modul (Power Management)
- 114: Physikalischer Layer "SPE PHY" (nicht-massebezogen)
- 116: Physikalischer Layer "IO-link Classic PHY" (masse-bezogen)
- 118: MAC-Modul
- 122: UART oder SPI-Modul (Universal Asynchronous Receiver Transmitter oder Serial Peripheral Interface)
- 124: MAC-Modul
- 126: (R)MII-Schnittstelle [(Reduced) Media-Independent Interface]
- 128: GPIO-Schnittstelle (General Purpose Input/Output)
- 130: Schaltelement
- 140: Leitung
- Pin 1: Pin
- Pin 2: Pin
- Pin 3: Pin
- Pin 4: Pin

- 200: Vorrichtung, IO-Link-Master
- 202: Mikroprozessor; Steuereinheit MPU; Ethernet-Switch
- 204: Feldgerät-Anschluss, Port
- 206: Leistungs-Eingang
- 208: Steuerungs-Schnittstelle (Ethernet)
- 210: Physikalischer Layer "ETH PHY"
- 212: PM-Modul (Power Management)
- 214: Physikalischer Layer SPE PHY (nicht-massebezogen)
- 216: Physikalischer Layer IO-Link Classic PHY (masse-bezogen)
- 218: MAC-Modul
- 222: UART oder SPI-Modul (Universal Asynchronous Receiver Transmitter oder Serial Peripheral Interface)
- 224: MAC-Modul
- 226: (R)MII-Schnittstelle [(Reduced) Media-Independent Interface]
- 228: GPIO-Schnittstelle (General Purpose Input/Output)
- 232: CDN-Modul (Coupling/Decoupling Network)
- 234: PSE-Controller-Modul (Power Sourcing Equipment Controller)
- 240: Leitung

- 300: Vorrichtung
- 302: IO-Master und Ethernet Switch
- 310: Port
- 320: Port
- 330: Port
- 380: Port
- 400: Übergeordnetes Steuerungssystem
- 410: Datenbus, Ethernet-Verbindung
- F1: Feldgerät
- F2: Feldgerät
- F3: Feldgerät
- Fn: Feldgerät

## Patentansprüche

1. Vorrichtung (100, 200) zum Verbinden eines Feldgeräts (F1, F2, F3, Fn) mit
einem Steuerungssystem (400), umfassend
eine Steuerungs-Schnittstelle (108, 208) zum Herstellen einer datentechnischen Verbindung mit dem Steuerungssystem (400), insbesondere über einen Datenbus (410), beispielsweise mittels einer Ethernet-Verbindung;
einen zumindest dreipoligen Feldgerät-Anschluss (104, 204) zum Herstellen einer Verbindung mit dem Feldgerät (F1, F2, F3, Fn) zur Datenübertragung und Leistungsübertragung, beispielsweise über ein IO-Link-Netzwerk; einen Mikroprozessor (102);
einen physikalischen Layer (116, 216) für masse-bezogene Kommunikationssignale, insbesondere einen physikalischen IO-link-Layer "IO-link PHY"; und
einen weiteren physikalischen Layer (114, 214) für nicht-massebezogene Kommunikationssignale, insbesondere ein SPE-Layer "SPE PHY"; wobei der Feldgerät-Anschluss (104, 204) so ausgebildet ist, dass das Feldgerät (F1, F2, F3, Fn) für masse-bezogene Kommunikationssignale und für nicht-massebezogene Kommunikationssignale anschließbar ist.

2. Vorrichtung (100) nach Anspruch 1, **dadurch gekennzeichnet, dass**,
zwischen dem physikalischen Layer (116) für masse-bezogene Kommunikationssignale und dem weiteren physikalischen Layer (114) für nicht-massebezogene Kommunikationssignale ein Schaltelement (130) vorgesehen ist; wobei
die Vorrichtung (100) dazu eingerichtet ist, das Schaltelement (130) in Abhängigkeit von einem empfangenen Konfigurationssignal und/oder einem für den Feldgerät-Anschluss (104) verwendeten Stecker und/oder empfangenen Kommunikationsdaten und/oder einer Versorgungsart des Feldgeräts (F1, F2, F3, Fn) so anzusteuern, dass das Schaltelement (130) entweder zu dem physikalischen Layer (116) für masse-bezogene Kommunikationssignale oder zu dem physikalischen Layer (114) für nicht-massebezogene Kommunikationssignale schaltet, sodass die datentechnische Verbindung zu dem Feldgerät (F1, F2, F3, Fn) über den entsprechenden physikalischen Layer (114, 116) herstellbar ist.

3. Vorrichtung (100) nach Anspruch 2, **dadurch gekennzeichnet, dass** das Schaltelement (130) über eine Leitung direkt mit dem Mikroprozessor (102) verbunden ist, wobei der Mikroprozessor (102) dazu eingerichtet ist, die Funktion des Schaltelements (130) zu steuern in Abhängigkeit von dem empfangenen Konfigurationssignal und/oder dem verwendeten Stecker und/oder den empfangenen Kommunikationsdaten und/oder der Versorgungsart des Feldgeräts (F1, F2, F3, Fn).

4. Vorrichtung nach einem der vorhergehenden Ansprüche, **dadurch gekennzeichnet, dass** die Vorrichtung (100) dazu eingerichtet ist, das Feldgerät (F1, F2, F3, Fn) über ein erstes Adernpaar mit elektrischer Leistung zu versorgen und über ein zweites Adernpaar die datentechnische Verbindung herzustellen; wobei
insbesondere der Feldgerät-Anschluss (104) dazu eingerichtet ist, über zwei Pins (P1, P3) das Feldgerät (F1, F2, F3, Fn) mit elektrischer Leistung zu versorgen; und wobei
insbesondere der Feldgerät-Anschluss (104) dazu eingerichtet ist, zwei weitere Pins (P2, P4) für masse-bezogene Kommunikationssignale als C/Q und optional mit einer Funktion wie DI/DO zu schalten oder für nicht-massebezogene Kommunikationssignale als DL+ und DL- zu schalten.

5. Vorrichtung (100) nach einem der Ansprüche 1 bis 3, **dadurch gekennzeichnet, dass** die Vorrichtung (100) dazu eingerichtet ist, das Feldgerät (F1, F2, F3, Fn) über ein erstes Adernpaar, insbesondere über zwei Pins (P1, P3), mit elektrischer Leistung zu versorgen; wobei, insbesondere für nicht-massebezogene Kommunikationssignale, die Vorrichtung (100) dazu eingerichtet ist, die datentechnische Verbindung ebenfalls über das erste Adernpaar herzustellen, insbesondere über die zwei Pins (P1, P3); und wobei
insbesondere die Vorrichtung (100) dazu eingerichtet ist, für masse-bezogene Kommunikationssignale die datentechnische Verbindung über eine weitere Ader herzustellen, insbesondere über einen weiteren Pin (P4), wobei der weitere Pin (P4) insbesondere als C/Q schaltbar ist; wobei, optional,
die Vorrichtung (100) dazu eingerichtet ist, das erste Adernpaar, insbesondere die zwei Pins (P1, P3), so anzusteuern, dass das Feldgerät (F1, F2, F3, Fn) bei masse-bezogenen Kommunikationssignalen mit einer Spannung von 24 V und GND, sowie bei nicht-massebezogenen Kommunikationssignalen mittels Power over Dataline, PoOL, beziehungsweise über Single Pair Ethernet/Power over Dataline, SPE/PoDL, mit elektrischer Leistung versorgbar ist.

6. Vorrichtung (100) nach einem der vorherigen Ansprüche, **dadurch**
**gekennzeichnet, dass** der Mikroprozessor (102) über die Leitung direkt mit einem Pin (P1, P2, P3, P4), insbesondere mit einem Kommunikationspin (P2, P4), leitend verbunden ist;
und/oder
dass der Feldgerät-Anschluss (104) eine Steckerbuchse umfasst, die als IO-LINK-Steckerbuchse nach der Norm 61131-9, insbesondere drei- oder vierpolig, ausgebildet ist.

7. Vorrichtung nach einem der vorherigen Ansprüche, **dadurch**
**gekennzeichnet, dass** der Feldgerät-Anschluss (104) eine Steckerbuchse umfasst, die zur mechanischen und leitenden Verbindung mit einem Stecker ausgebildet ist; wobei
die Steckerbuchse zumindest vier Pins (P1, P2, P3, P4) aufweist, insbesondere konform zum IO-Link-Standard, umfassend zwei Pins (P2, P4) zur Datenübertragung und zwei Pins (P1, P3) zur Leistungsübertragung, insbesondere für eine IO-Link-Verbindung; wobei die Steckerbuchse ferner zur zweipoligen Verbindung mit einem SPE-Stecker für ein Twisted-Pair-Kabel eines Single-Pair-Ethernet (SPE) geeignet ist, wobei der SPE-Stecker leitend mit den zwei Pins (P2, P4) zur Kommunikation verbindbar ist; und wobei
die Steckerbuchse zudem formschlüssig mit einem IO-Link-Stecker verbindbar ist.

8. Stecker zum Verbinden mit einem Feldgerät-Anschluss einer Vorrichtung (200) nach einem der vorherigen Ansprüche, insbesondere zum Verbinden der Vorrichtung mit dem Feldgerät über Single Pair Ethernet, SPE, insbesondere mit einer Leistungsübertragung über SPE; wobei der Stecker zumindest ein nicht-leitendes, formschlüssiges Gegenelement zu einem Pin (P2) des Feldgerät-Anschlusses aufweist.

9. Set (Kit-of-Parts) aus einer IO-Link-Steckerbuchse und einem Stecker, wobei die IO-Link-Steckerbuchse vierpolig und nach IO-Link-Standard ausgebildet ist, aufweisend zumindest einen Pin (P4) zur masse-bezogenen Datenübertragung und zwei Pins (P1, P3) zur Leistungsübertragung, wobei der Stecker als SPE-Stecker für ein Twisted-Pair-Kabel eines Single-Pair-Ethernet (SPE) zweipolig ausgebildet ist, wobei der Stecker leitend mit den zwei Pins (P1, P3) zur Leistungsübertragung der IO-Link-Steckerbuchse verbindbar ist.

10. Verfahren zum Betreiben einer Vorrichtung (100) zum Verbinden eines Feldgeräts (F1, F2, F3, Fn) mit einem Steuerungssystem (400), umfassend die Schritte:
- Herstellen einer datentechnischen Verbindung der Vorrichtung (100) mit dem Steuerungssystem (400), insbesondere über einen Datenbus (400), beispielsweise mittels einer Ethernet-Verbindung;
- Anschließen des Feldgeräts (F1, F2, F3, Fn) an die Vorrichtung (100) über eine Steckverbindung aus einer Steckerbuchse der Vorrichtung (100) und einem Stecker mit einem Kabel zur Datenübertragung und Leistungsübertragung zwischen der Vorrichtung (100) und dem Feldgerät (F1, F2, F3, Fn);
- Erkennen eines Typs von für das Feldgerät (F1, F2, F3, Fn) verwendbaren Kommunikationssignalen, insbesondere masse-bezogene Kommunikationssignale wie bei IO-Link oder nicht-massebezogene Kommunikationssignale wie bei SPE;
- vom Erkennen abhängiges Einstellen der Vorrichtung (100) für eine Datenübertragung mittels eines physikalischen Layers für masse-bezogene Kommunikationssignale, beispielsweise über ein IO-Link-Netzwerk, oder eines physikalischen Layers für nicht-massebezogene Kommunikationssignale, beispielsweise über ein SPE-Netzwerk.
